# EUROPEAN PATENT APPLICATION

(11) **EP 2 555 566 A1**
(43) Date of publication of application: **06.02.2013**
(21) Application number: 11762767.9
(22) Date of filing: 28.03.2011
(51) Int. Cl.: H04W 52/24, H04W 16/10, H04W 52/38, H04W 84/10

(54) **LOW POWER BASE STATION, AND COMMUNICATION CONTROL METHOD**

(30) Priority: 29.03.2010 JP 2010075018
(71) Applicant: Kyocera Corporation, Kyoto-shi, Kyoto 612-8501 (JP)
(72) Inventor: NAKAMURA, Kazutaka, Yokohama-shi Kanagawa 224-8502 (JP)
(74) Representative: Sandmair, Kurt
(86) International application number: PCT/JP2011/057599
(87) International publication number: WO 2011/122543

(57) **Abstract**

Disclosed is a low power base station (300) which acquires propagation loss information indicating the propagation loss between the low power base station (300) and a high power base station. (100). The low power base station (300) restricts the transmission power of the low power base station (300) and the transmission power of a femtocell terminal (400) on the basis of the propagation loss indicated in the acquired propagation loss information.

## Description

### TECHNICAL FIELD

The present invention relates to a low power base station that constitutes a radio communication system together with a high power base station and has transmission output smaller than transmission output of the high power base station, and a communication control method in the low power base station.

### BACKGROUND ART

As the next-generation radio communication system for achieving higher speed communication with higher capacity, as compared with the 3rd-generation and 3.5th-generation radio communication systems operated at present, an LTE has been standardized by 3GPP, which is a group aiming to standardize a radio communication system. The technical specifications of the LTE have been specified as 3GPP Release 8, and Release 9, which is an upgrade version of Release 8, and an LTE Advanced, which is a sophisticated version of the LTE, have been currently considered.

Furthermore, in the Release 9, detailed functions and requirements of a low power base station (Home eNodeB) have been standardized, which has small transmission output, forms a cell (a small cell) being a communication area having a radius of about several [m] to about several tens of [m], and which is a small base station installable in a room. The low power base station is installed in order to distribute traffic of a high power base station (Macro eNodeB), which has transmission output larger than transmission output of the low power base station and forms a cell (a large cell) being a communication area having a radius of about several hundred [m], or to cover a dead zone in the large cell. The configuration of such a radio communication system is called a heterogeneous network (for example, refer to Non Patent Literature 1).

### PRIOR ART DOCUMENT

### NON-PATENT DOCUMENT

Non-Patent Document : 3GPP TR25.967, "Home Node B Radio Frequency (RF) Requirements (FDD)", clause 7.2, "Control of HNB downlink interference", March, 2009

### SUMMARY OF THE INVENTION

Meanwhile, when a low power base station is installed in the large cell, radio communication between the low power base station and a radio terminal subordinate to the low power base station may cause interference to radio communication between a high power base station and a radio terminal subordinate to the high power base station. Therefore, it is necessary to reduce the interference.

Therefore, the present invention has been achieved in view of the above-described problems, and has an object to provide a low power base station and a communication control method, by which it is possible to appropriately reduce interference to radio communication between a high power base station and a radio terminal subordinate to the high power base station.

To solve the above problem, the present invention has following features. A first feature of the present invention is summarized as a low power base station (low power base station 300), which has transmission output smaller than transmission output of a high power base station (high power base station 100), comprising: a transmission power limitation unit (femto transmission power limitation unit 322) configured to limit transmission power of at least one of the low power base station and a radio terminal subordinate to the low power base station, based on propagation loss information indicating propagation loss between the low power base station and the high power base station.

Based on the propagation loss information indicating the propagation loss between the low power base station and the high power base station, the low power base station limits the transmission power of at least one of the low power base station and the radio terminal subordinate to the low power base station. That is, in consideration of the propagation loss between the low power base station and the high power base station, it is possible for the low power base station to limit the transmission power of at least one of the low power base station and the radio terminal subordinate to the low power base station, and to appropriately reduce interference to radio communication between the high power base station and a radio terminal subordinate to the high power base station.

A second feature of the present invention is summarized as that the transmission power limitation unit is configured to perform control of reducing the transmission power of the radio terminal subordinate to the low power base station as the propagation loss indicated by the propagation loss information is smaller.

When the propagation loss between the low power base station and the high power base station is small, it is highly probable that the high power base station is interfered by uplink radio communication between the low power base station and a radio terminal subordinate to the low power base station. In this regard, as the propagation loss between the low power base station and the high power base station is smaller, the low power base station performs control of reducing the transmission power of the radio terminal subordinate to the low power base station, thereby suppressing interference to the high power base station from the uplink radio communication between the low power base station and the radio terminal subordinate to the low power base station.

A third feature of the present invention is summarized as that the transmission power limitation unit is configured to perform control of reducing the transmission power of the low power base station as the propagation loss indicated by the propagation loss information is large.

When the propagation loss between the low power base station and the high power base station is large, if a radio terminal subordinate to the high power base station exists in the vicinity of the low power base station, it is highly probable that the radio terminal subordinate to the high power base station is interfered by downlink radio communication between the low power base station and a radio terminal subordinate to the low power base station. In this regard, as the propagation loss between the low power base station and the high power base station is larger, the low power base station performs control of reducing the transmission power of the low power base station, thereby suppressing interference to uplink radio communication with the radio terminal subordinate to the high power base station from uplink radio communication between the low power base station and the radio terminal subordinate to the low power base station.

A fourth feature of the present invention is summarized as that the propagation loss indicates a difference between transmission power of a predetermined signal transmitted from the high power base station to a radio terminal subordinate to the high power base station and reception power of the predetermined signal in the low power base station.

A fifth feature of the present invention is summarized as a communication control method in a low power base station, which has transmission output smaller than transmission output of a high power base station, comprising: a step of limiting transmission power of at least one of the low power base station and a radio terminal subordinate to the low power base station, based on propagation loss information indicating propagation loss between the low power base station and the high power base station.

A sixth feature of the present invention is summarized as a communication control method in a low power base station, which has transmission output smaller than transmission output of a high power base station, comprising: a step of limiting transmission power of at least one of the low power base station and a radio terminal subordinate to the low power base station, based on propagation loss information indicating propagation loss between the low power base station and the high power base station; and a step of, when the transmission power is limited, transmitting information indicating limitation of the transmission power to the high power base station using a base station communication means set between the low power base station and the high power base station.

According to the present invention, it is possible to appropriately reduce interference to radio communication between a high power base station and a radio terminal subordinate to the high power base station.

### BRIEF DESCRIPTION OF THE DRAWINGS

[Fig. 1] Fig. 1 is a diagram showing the entire schematic configuration diagram of a radio communication system according to an embodiment of the present invention.
[Fig. 2] Fig. 2 is a block diagram showing the configuration of a low power base station according to the embodiment of the present invention.
[Fig. 3] Fig. 3 is a diagram showing an example of a downlink frequency band available to the low power base station according to the embodiment of the present invention.
[Fig. 4] Fig. 4 is a diagram showing an example of an uplink frequency band available to the low power base station according to the embodiment of the present invention.
[Fig. 5] Fig. 5 is a flowchart showing an operation example of the low power base station according to the embodiment of the present invention.

### MODES FOR CARRYING OUT THE INVENTION

Next, an embodiment of the present invention will be described with reference to the drawings. Specifically, the embodiment of the present invention will be described in sequence of (1) Configuration of radio communication system, (2) Operation of low power base station, (3) Operation and effect, and (4) Other embodiments. It is to be noted that the same or similar reference numerals are applied to the same or similar parts through the drawings in the following embodiments.

### (1) Configuration of radio communication system

### (1. 1) Entire schematic configuration of radio communication system

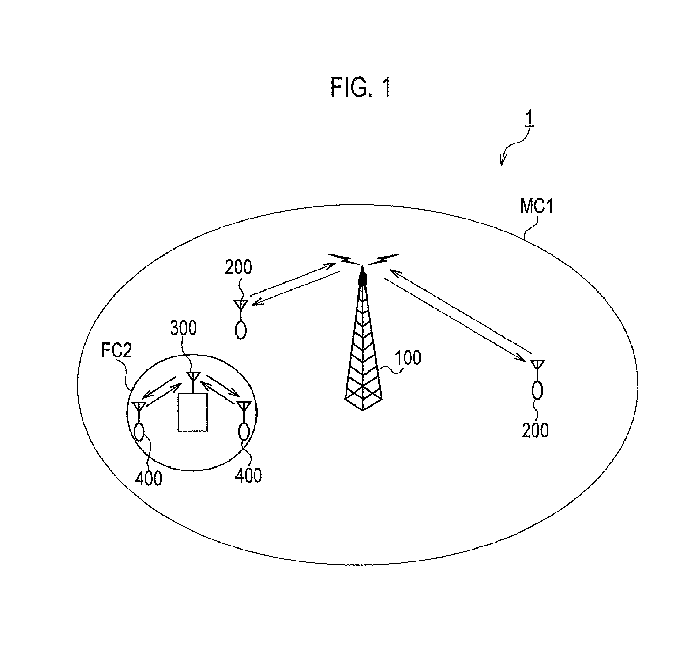

Fig. 1 is a diagram showing the entire schematic configuration of a radio communication system 1 according to an embodiment of the present invention. The radio communication system 1, for example, has a configuration based on the LTE Release 9 which is a 3.9th-generation (3.9G) cellular phone system, or the LTE-Advanced positioned as a 4th-generation (4G) cellular phone system.

As shown in Fig. 1, the radio communication system 1 includes a high power base station (a high output power base station, a large output base station) (for example, a macro cell base station) 100, which forms a large cell (for example, a macro cell) MC1, and a low power base station (a low output power base station, a small output base station) (for example, a femto cell base station: HeNB)) 300, which has transmission power smaller than transmission power of the high power base station 100 and forms a small cell (for example, a femto cell) FC2. A radius of the large cell MC1, for example, is about several hundred [m] and a radius of the small cell FC2, for example, is in the range from about several [m] to about several tens of [m].

In an area subordinate to the high power base station 100, in other words, in the large cell MC1 and outside the small cell FC2, radio terminals 200 exist. It is possible for the high power base station 100 and the radio terminals 200 to perform radio communication with each other. Furthermore, in an area subordinate to the low power base station 300, in other words, in the small cell FC2, radio terminals 400 exist. It is possible for the low power base station 300 and the radio terminals 400 to perform radio communication with each other. Hereinafter, the radio terminals 200 will be referred to as macro terminals 200 and the radio terminals 400 will be referred to as femto terminals 400.

The high power base station 100 is installed at a place based on a cell site design in which a communication provider has considered inter-cell interference. Meanwhile, the low power base station 300 is configured in a small size enough to be installed at an arbitrary place (specifically, in an indoor space) by a user. The low power base station 300 is installed in the large cell MC1 in order to distribute traffic of the high power base station 100, or to cover a dead zone in the large cell MC1.

When a frequency band of a downlink (a link from the high power base station 100 to the macro terminals 200, hereinafter, referred to as a "macro downlink"), which is used in radio communication when the high power base station 100 and the macro terminals 200 are connected to perform the radio communication with each other, overlaps a frequency band of a downlink (a link from the low power base station 300 to the femto terminals 400, hereinafter, referred to as a "femto downlink") used in radio communication when the low power base station 300 and the femto terminals 400 are connected to perform the radio communication with each other, the macro terminals 200 performing the radio communication with the high power base station 100 are interfered by a radio signal transmitted from the low power base station 300 to the femto terminals 400 through the femto downlink.

When a frequency band of an uplink (a link from the macro terminals 200 to the high power base station 100, hereinafter, referred to as a "macro uplink"), which is used in radio communication when the high power base station 100 and the macro terminals 200 are connected to perform the radio communication with each other, overlaps a frequency band of an uplink (a link from the femto terminals 400 to the low power base station 300, hereinafter, referred to as a "femto uplink") used in radio communication when the low power base station 300 and the femto terminals 400 are connected to perform the radio communication with each other, the high power base station 100 performing the radio communication with the macro terminals 200 is interfered by a radio signal transmitted from the femto terminals 400 to the low power base station 300 through the femto uplink.

In the present embodiment, the low power base station 300 reduces the interference to the high power base station 100 and the macro terminals 200, in other words, the low power base station 300 reduces the interference to the radio communication between the high power base station 100 and the macro terminals 200 from the radio communication between the low power base station 300 and the femto terminals 400.

### (1.2) Configuration of low power base station

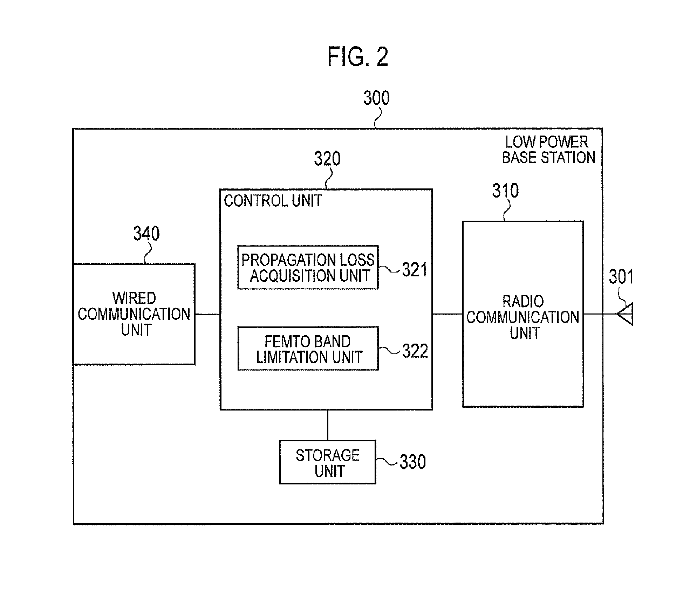

Fig. 2 is a block diagram showing the configuration of the low power base station 300. As shown in Fig. 2, the low power base station 300 includes an antenna unit 301, a radio communication unit 310, a control unit 320, a storage unit 330, and a wired communication unit 340.

The radio communication unit 310, for example, is configured using a radio frequency (RF) circuit, a baseband (BB) circuit and the like, and transmits and receives a radio signal to/from the femto terminal 400 through the antenna unit 301. Furthermore, the radio communication unit 310 encodes and modulates a transmission signal, and demodulates and decodes a reception signal.

Furthermore, when the high power base station 100 and the macro terminals 200 are connected to perform radio communication with each other using the macro downlink, the radio communication unit 310 receives a radio signal from the high power base station 100.

The control unit 320, for example, is configured using a CPU (Central Processing Unit), a DSP (Digital Signal Processor) and the like, and controls various functions of the low power base station 300.

The storage unit 330, for example, is configured using a memory, and stores various types of information used for the control and the like of the low power base station 300.

The wired communication unit 340 communicates with a communication apparatus connected to an exterior of the low power base station 300 through a wired communication network (a backhaul line) (not shown). In addition, the wired communication unit 340 is also available for communication between the low power base station 300 and the high power base station 100. In this case, the low power base station 300 sets a logical communication path between the low power base station 300 and the high power base station 100 through the wired communication unit 340, and directly transmits information to the high power base station 100 through the logical communication path. Furthermore, in this case, the low power base station 300 receives information from the high power base station 100 through the logical communication path. Furthermore, the low power base station 300 may constitute a radio communication unit for communication through the backhaul line, instead of the wired communication unit 340.

The control unit 320 includes a propagation loss acquisition unit 321 and a femto transmission power limitation unit 322.

The propagation loss acquisition unit 321 acquires propagation loss information indicating propagation loss between the low power base station 300 and the high power base station 100. Here, the propagation loss includes distance attenuation, shadowing loss, and feature pass loss.

Specifically, the propagation loss acquisition unit 321 receives a reference signal, which is transmitted by the high power base station 100 in radio communication using the macro downlink, and a signal including the transmission power of the reference signal, through the antenna unit 301 and the radio communication unit 310. The propagation loss acquisition unit 321 measures the power (reception power) of the received reference signal. Moreover, the propagation loss acquisition unit 321 acquires the difference between the transmission power and the reception power of the reference signal as the propagation loss information.

Based on the propagation loss information acquired by the propagation loss acquisition unit 321, the femto transmission power limitation unit 322 limits at least one of the transmission power of the low power base station 300 and the transmission power of the femto terminal 400 subordinate to the low power base station 300. Here, limiting the transmission power means that the transmission power is allowed to be zero, the transmission power is lowered below a reference value, and the like.

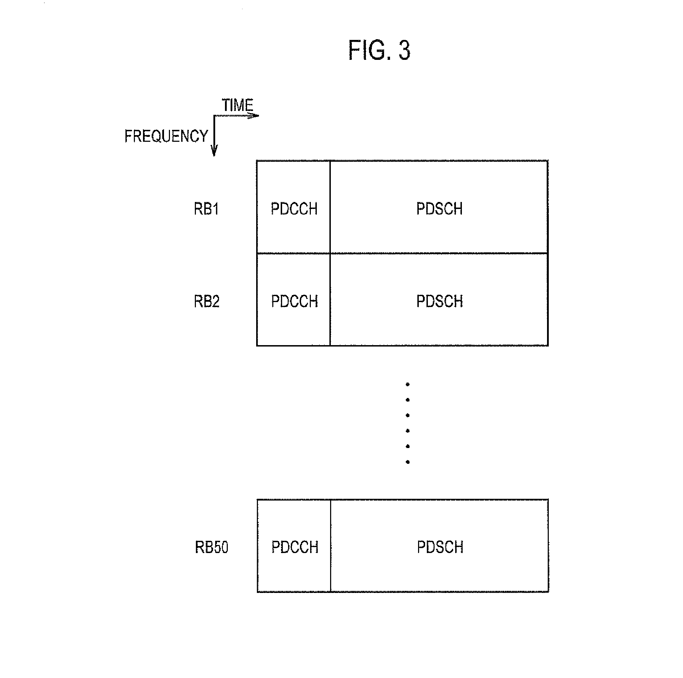

Fig. 3 is a diagram showing an example of a downlink frequency band available to the low power base station 300. For example, when a downlink frequency bandwidth available to the low power base station 300 is 10 [MHz], the downlink frequency band is divided into 50 resource blocks (RBs) 1 to 50. Each resource block is configured by a control information channel (PDCCH: Physical Downlink Control CHannel) for downlink control information transmission and a shared data channel (PDSCH: Physical Downlink Shared CHannel) for downlink user data transmission.

The PDCCH includes various types of information required for receiving user data included in the PDSCH. Therefore, when it is not possible for the femto terminal 400 to receive the information in the PDCCH, it is not possible to receive the user data in the PDSCH. Accordingly, since the PDCCH is an important radio channel, it is preferable not to limit the assignment of the PDCCH.

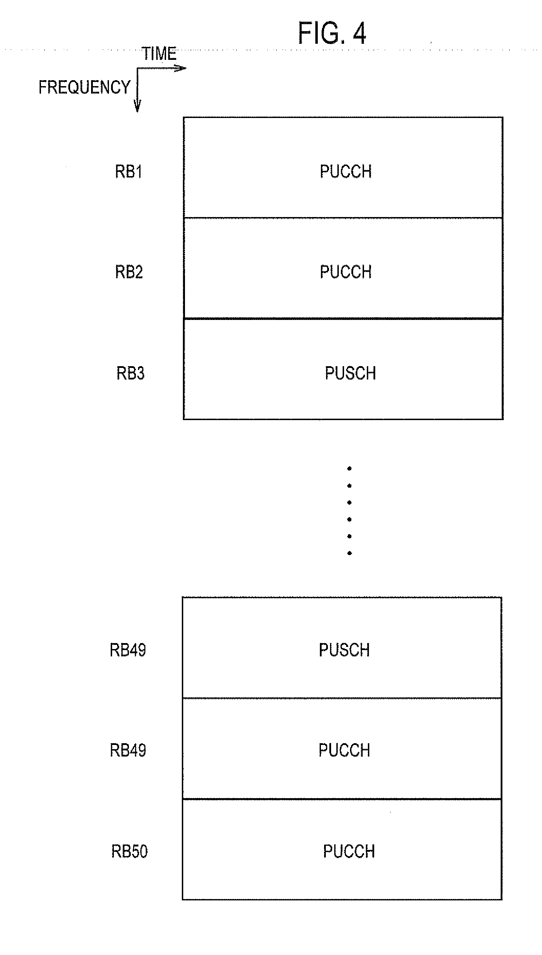

Fig. 4 is a diagram showing an example of an uplink frequency band available to the low power base station 300. For example, when an uplink frequency bandwidth available to the low power base station 300 is 10 [MHz], the uplink frequency band is divided into 50 resource blocks (RBs) 1 to 50. The resource blocks include control information channel (PUCCH: Physical Uplink Control CHannel) resource blocks for uplink control information transmission, and shared data channel (PUSCH: Physical Uplink Shared CHannel) resource blocks for uplink user data transmission. In the example of Fig. 4, RB1, RB2, RB 49, and RB 50 are the PUCCH and the other resource blocks are the PUSCH. The PUCCH includes various types of information required for receiving user data included in the PDSCH. Therefore, when it is not possible for the femto terminal 400 to receive the information in the PDCCH, it is not possible to receive the user data in the PDSCH. Accordingly, since the PDCCH is an important radio channel, it is preferable not to limit the assignment of the PDCCH. When the propagation loss between the low power base station 300 and the high power base station 100, which is indicated by the propagation loss information, is small, it is highly probable that the high power base station 100 is interfered by the uplink radio communication between the low power base station 300 and the femto terminal 400.

In this regard, as the propagation loss between the low power base station 300 and the high power base station 100 is smaller, the femto transmission power limitation unit 322 determines a transmission power value of the femto terminal 400 such that the transmission power of the femto terminal 400 is reduced.

Meanwhile, when the propagation loss between the low power base station 300 and the high power base station 100, which is indicated by the propagation loss information, is large, if the macro terminal 200 exists in the vicinity of the low power base station 300, it is highly probable that the macro terminal 200 is interfered by the downlink radio communication between the low power base station 300 and the femto terminal 400 in the state in which the reception power of the macro terminal 200 for a radio signal from the high power base station 100 is small.

In this regard, as the propagation loss between the low power base station 300 and the high power base station 100 is larger, the femto transmission power limitation unit 322 determines a transmission power value of the low power base station 300 such that the transmission power of the low power base station 300 is reduced.

The femto transmission power limitation unit 322 limits the transmission power of the femto terminal 400 to the determined transmission power value. Specifically, the femto transmission power limitation unit 322 transmits information on the determined transmission power value to the femto terminal 400 using the PDCCH through the radio communication unit 310 and the antenna unit 301. In response to the received transmission power information, the femto terminal 400 transmits a radio signal to the low power base station 300 by the limited transmission power value.

The femto transmission power limitation unit 322 limits the transmission power of the low power base station 300 to the determined transmission power value. Then, the control unit 320 and the radio communication unit 310 transmit radio signals to the radio terminal 400 by the limited transmission power value.

### (2) Operation of low power base station

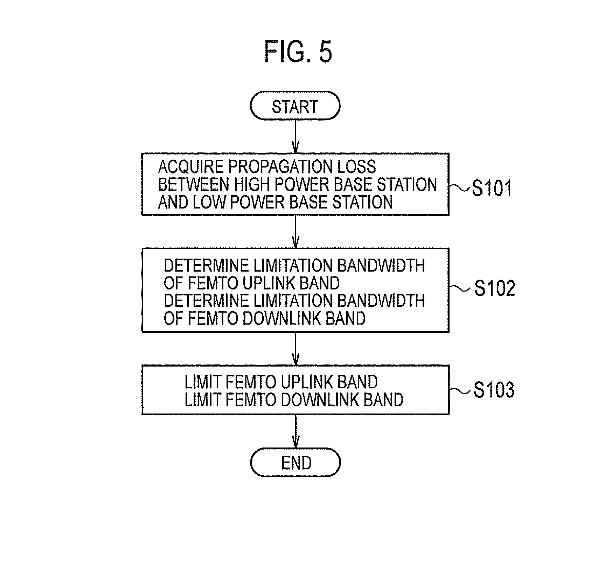

Next, the operation of the low power base station 300 will be described. Fig. 5 is a flowchart showing an operation example of the low power base station 300 according to the embodiment of the present invention.

In step S101, the propagation loss acquisition unit 321 of the control unit 320 acquires propagation loss between the high power base station 100 and the low power base station 300.

In step S102, based on the propagation loss between the low power base station 300 and the high power base station 100, the femto transmission power limitation unit 322 of the control unit 320 determines the transmission power value of the low power base station 300 and the transmission power value of the femto terminal 400.

In step S103, the femto transmission power limitation unit 322 of the control unit 320 limits the transmission power of the femto terminal 400 to the determined transmission power value, and limits the transmission power of the low power base station 300 to the determined transmission power value.

### (3) Operation and effect

Based on the propagation loss information indicating the propagation loss between the low power base station 300 and the high power base station 100, the low power base station 300 in the present embodiment limits the transmission power of the low power base station 300 and the transmission power of the femto terminal 400 subordinate to the low power base station 300. Specifically, the low power base station 300 limits the transmission power of the femto terminal 400 to be reduced as the propagation loss between the low power base station 300 and the high power base station 100 is small, and limits the transmission power of the low power base station 300 to be reduced as the propagation loss between the low power base station 300 and the high power base station 100 is larger.

As described above, in consideration of the propagation loss between the low power base station 300 and the high power base station 100, it is possible for the low power base station 300 to limit the transmission power of the low power base station 300 and the femto terminal 400 subordinate to the low power base station 300, and to appropriately reduce interference to the radio communication between the high power base station 100 and the macro terminal 200 subordinate to the high power base station 100.

### (4) Other embodiments

As described above, the present invention has been described with the embodiments. However, it should not be understood that those descriptions and drawings constituting a part of the present disclosure limit the present invention. Further, various substitutions, examples, or operational techniques shall be apparent to a person skilled in the art based on this disclosure.

In the embodiment, in consideration of the propagation loss between the low power base station 300 and the high power base station 100, the low power base station 300 limits the transmission power of the low power base station 300 and the femto terminal 400. However, in consideration of the presence of the macro terminals 200, the low power base station 300 may limit the transmission power of the low power base station 300 and the femto terminal 400.

In this case, the control unit 320 of the low power base station 300 detects the macro terminals 200. Specifically, the control unit 320 detects a macro terminal 200, which exists in the vicinity of the low power base station 300 and may be interfered by the low power base station 300, among the macro terminals 200.

Examples of techniques for detecting the macro terminals 200 include the following first and second detection techniques. In the first detection technique, the control unit 320 measures interference amounts in respective frequencies in an entire frequency band of the femto uplink. Here, the interference amounts are measured by received intensity of signals from terminals other than the femto terminals 400. Next, when a frequency band, in which the interference amount is equal to or higher than a first predetermined value, exists in the entire frequency band of the femto uplink, the control unit 320 determines that the macro terminals 200 exist.

Furthermore, in the second detection technique, the control unit 320 specifies a radio signal, which includes a pattern of a reference signal other than a pattern of a reference signal from the femto terminal 400 subordinate to the low power base station 300, among radio signals of the frequency band of the femto uplink received in the radio communication unit 310. Here, the pattern of the reference signal from the femto terminal 400 has been determined in advance and is recognizable by the control unit 320. Next, the control unit 320 measures received electric field intensity (RSRP) of the radio signal including the pattern of the reference signal other than the pattern of the reference signal from the femto terminal 400, and determines that the macro terminals 200 exist when the received electric field intensity (RSRP) is equal to or higher than a second predetermined value determined in advance. In addition, the detection technique of the macro terminals 200 is not limited to the aforementioned first and second detection techniques.

When the macro terminals 200 are detected by the aforementioned detection techniques, the femto transmission power limitation unit 322 limits the transmission power of the low power base station 300 and the femto terminal 400 based on the propagation loss information acquired by the propagation loss acquisition unit 321.

After the frequency band to be assigned to the femto terminal 400 is limited, when the macro terminals 200 are not detected, the femto transmission power limitation unit 322 releases the limitation of the transmission power of the low power base station 300 and the femto terminal 400.

In the embodiment, there has been described a case in which the high power base station 100 is a macro cell base station that forms a macro cell and the low power base station 300 is a femto cell base station that forms a femto cell. However, the high power base station 100 and the low power base station 300 are not limited thereto. That is, it is sufficient if the transmission power of the low power base station 300 is smaller than the transmission power of the high power base station 100. For example, when the high power base station 100 is a macro cell base station that forms a macro cell, the low power base station 300 may be a base station that forms a micro cell or a pico cell. Furthermore, when the high power base station 100 is a micro cell base station that forms a micro cell, the low power base station 300 may be a base station that forms a pico cell or a femto cell. Moreover, when the high power base station 100 is a pico cell base station that forms a pico cell, the low power base station 300 may be a base station that forms a femto cell.

Furthermore, in the embodiment, in consideration of the propagation loss between the low power base station 300 and the high power base station 100, the low power base station 300 limits at least one of the transmission power (downlink transmission power) of the low power base station 300 and the transmission power (uplink transmission power) of the femto terminal 400. However, when the low power base station 300 has performed this limitation, the low power base station 300 may transmit information indicating the limitation of the transmission power to the high power base station 100. Specifically, the low power base station 300 may transmit at least one of information (including information indicating transmission power itself or identification information indicating the transmission power. Hereinafter, the same is applied) indicating the transmission power after the transmission power of the low power base station 300 is limited, and information indicating the transmission power after the transmission power of the femto terminal 400 is limited to the high power base station 100 through the wired communication unit 340 via a logical communication path set between the low power base station 300 and the high power base station 100. Alternatively, the low power base station 300 may transmit at least one of information (including information indicating a limitation amount itself of the transmission power or identification information indicating the limitation amount of the transmission power. Hereinafter, the same is applied) indicating the limitation amount of the transmission power after the transmission power of the low power base station 300 is limited, and information indicating the limitation amount of the transmission power after the transmission power of the femto terminal 400 is limited to the high power base station 100 through the wired communication unit 340 via the logical communication path set between the low power base station 300 and the high power base station 100. In this case, when the information indicating the limitation of the transmission power is received from the low power base station 300, the high power base station 100 uses the information indicating the limitation of the transmission power in controlling transmission power (including the assignment of a radio resource in the high power base station) of at least one of a downlink and an uplink in the high power base station 100. In this case, it is possible for the low power base station 300 to more appropriately reduce interference to the radio communication between the high power base station 100 and the macro terminal 200 subordinate to the high power base station 100.

Furthermore, in the embodiment, the radio communication system 1 has a configuration based on the LTE Release 9 or the LTE-Advanced. However, a configurations based on another communication standard may also be adopted.

Thus, it must be understood that the present invention includes various embodiments that are not described herein. Therefore, the present invention is limited only by the specific features of the invention in the scope of the claims reasonably evident from the disclosure above.

In addition, the entire content of Japanese Patent Application No. 2010-075018 (filed on March 29, 2010) is incorporated in the present specification by reference.

### INDUSTRIAL APPLICABILITY

The low power base station and the communication control method of the present invention are applicable to a low power base station and a communication control method, by which it is possible to appropriately reduce interference to radio communication between a high power base station and a radio terminal subordinate to the high power base station.

## Claims

1. A low power base station, which has transmission output smaller than transmission output of a high power base station, comprising:
a transmission power limitation unit configured to limit transmission power of at least one of the low power base station and a radio terminal subordinate to the low power base station, based on propagation loss information indicating propagation loss between the low power base station and the high power base station.

2. The low power base station according to claim 1, wherein the transmission power limitation unit is configured to perform control of reducing the transmission power of the radio terminal subordinate to the low power base station as the propagation loss indicated by the propagation loss information is smaller.

3. The low power base station according to claim 1, wherein the transmission power limitation unit is configured to perform control of reducing the transmission power of the low power base station as the propagation loss indicated by the propagation loss information is large.

4. The low power base station according to claim 1, wherein the propagation loss indicates a difference between transmission power of a predetermined signal transmitted from the high power base station to a radio terminal subordinate to the high power base station and reception power of the predetermined signal in the low power base station.

5. A communication control method in a low power base station, which has transmission output smaller than transmission output of a high power base station, comprising:
a step of limiting transmission power of at least one of the low power base station and a radio terminal subordinate to the low power base station, based on propagation loss information indicating propagation loss between the low power base station and the high power base station.

6. A communication control method in a low power base station, which has transmission output smaller than transmission output of a high power base station, comprising:
a step of limiting transmission power of at least one of the low power base station and a radio terminal subordinate to the low power base station, based on propagation loss information indicating propagation loss between the low power base station and the high power base station; and
a step of, when the transmission power is limited, transmitting information indicating limitation of the transmission power to the high power base station using a base station communication means set between the low power base station and the high power base station.
